# EUROPÄISCHE PATENTSCHRIFT

(11) **EP 3 912 704 B1**
(45) Veröffentlichungstag und Bekanntmachung des Hinweises auf die Patenterteilung: **04.09.2024**
(21) Anmeldenummer: 20020239.8
(22) Anmeldetag: 20.05.2020
(51) Int. Cl.: B01D 53/14, C10K 1/00, C10K 1/16

(54) **GASWÄSCHEVERFAHREN ZUR REINIGUNG VON ROHSYNTHESEGAS DURCH PHYSIKALISCHE ABSORPTION IN METHANOL**
GAS SCRUBBING METHOD FOR PURIFYING CRUDE SYNTHESIS GAS BY MEANS OF PHYSICAL ABSORPTION IN METHANOL
PROCÉDÉ DE LAVAGE DE GAZ PERMETTANT DE PURIFIER UN GAZ DE SYNTHÈSE BRUTE PAR ABSORPTION PHYSIQUE DANS DU MÉTHANOL

(43) Veröffentlichungstag der Anmeldung: 24.11.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Arumugam, Ganesh, 51381 Leverkusen (DE); Rappold, Dorit, 60437 Frankfurt am Main (DE); Corbet, Sharon, 60438 Frankfurt am Main (DE); Szabo, Robert, 60326 Frankfurt am Main (DE)
(74) Vertreter: Air Liquide

(56) Entgegenhaltungen:
- EP-A1- 3 628 392
- EP-A2- 0 270 040
- DE-A1- 1 794 060
- DE-A1- 102013 010 103
- DE-A1- 19 610 846
- US-A1- 2013 036 911
- US-A1- 2015 321 136
- US-A1- 2019 001 256

## Beschreibung

### Gebiet der Erfindung

Die Erfindung betrifft ein Verfahren zur Reinigung von Rohsynthesegas durch physikalische Absorption in Methanol. Die Erfindung betrifft ferner eine Anlage zur Reinigung von Rohsynthesegas durch physikalische Absorption in Methanol und die Verwendung der erfindungsgemäßen Anlage in einem erfindungsgemäßen Verfahren.

### Stand der Technik

Verfahren zur Abtrennung von unerwünschten Begleitstoffen aus technischen Rohsynthesegasen mittels physikalischer Absorption sind aus dem Stand der Technik bekannt. So können mit solchen Verfahren unerwünschte Bestandteile aus durch Vergasung oder Reformierung von kohlenstoffhaltigen Einsatzstoffen erzeugten Rohsynthesegasen, beispielsweise Kohlendioxid (CO₂), Schwefelwasserstoff (H₂S) und Carbonylsulfid (COS) von den erwünschten Synthesegasbestandteilen wie Wasserstoff (H₂) und Kohlenmonoxid (CO) bis in den Spurenbereich entfernt werden. Die vorgenannten unerwünschten Bestandteile werden häufig unter dem Begriff "Sauergase" zusammengefasst.

In diesen auch als Gaswäschen bezeichneten Verfahren werden die Eigenschaften von Flüssigkeiten ausgenutzt, gasförmige Stoffe zu absorbieren und physikalisch oder chemisch gebunden in Lösung zu halten. Wie gut ein Gas von einer Flüssigkeit absorbiert wird, wird durch den Absorptionskoeffizienten ausgedrückt. Je besser das Gas in der Flüssigkeit absorbiert oder gelöst wird, desto größer ist der Absorptionskoeffizient. Der Absorptionskoeffizient steigt im Allgemeinen mit sinkender Temperatur und, nach dem Gesetz von Henry, mit steigendem Druck. Die in Gaswäschen eingesetzten Flüssigkeiten werden allgemein auch als Waschmittel bezeichnet.

Bei der Gaswäsche aus dem Rohsynthesegas ausgewaschene Komponenten werden im Anschluss an die Gaswäsche aus dem beladenen Waschmittel entfernt, wodurch ein regeneriertes oder zumindest teilregeneriertes Waschmittel erhalten wird. Bekannte Verfahren zur Regenerierung des Waschmittels sind Druckentspannung (Flashen), Verdrängen einer absorbierten Komponente mit einem Stripp-Gas (Strippen), Druckentspannung mit einem Stripp-Gas, sowie Heißregenerierung, bei der der Eigendampf des Waschmittels als Stripp-Gas verwendet wird. Um für eine erneute Absorption von Gaskomponenten aus dem Rohsynthesegas verwendet werden zu können, wird das Waschmittel in der letzten Regenerationsstufe üblicherweise einer Heißregenerierung unterzogen. Durch die Heißregenerierung wird ein nahezu reines Waschmittel zurückgewonnen, welches sich für die erneute Absorption von unerwünschten Gasbestandteilen aus dem Rohsynthesegas eignet.

Ein für die Reinigung von Rohsynthesegasen bedeutsames Verfahren ist die auch als Rectisol-Verfahren bekannte Methanol-Wäsche, welche beispielsweise in Ullmann's Encyclopedia of Industrial Chemistry, 6. Aufl. Bd. 15, S. 399 ff. grundsätzlich beschrieben wird. Das Rectisol-Verfahren nutzt unter anderen Faktoren die Tatsache aus, dass sich die Absorptionskoeffizienten von H₂S, COS und CO₂ in flüssigem, tiefkaltem Methanol um mehrere Größenordnungen von denen von H₂ und CO unterscheiden. Das Methanol wird nach dem Waschvorgang regeneriert und wieder in den Prozess zurückgeführt.

Im aus dem Stand der Technik bekannten Rectisol-Verfahren wird das Rohsynthesegas, bevor es der eigentlichen Absorption zugeführt wird, zunächst auf eine Temperatur von beispielsweise bis zu -40 °C abgekühlt, um das für die Absorption eingesetzte tiefkalte Methanol nicht unnötig aufzuheizen. Da das Rohsynthesegas in der Regel einen gewissen Anteil Wasser aufweist, beispielsweise aus einer vorhergehenden Wasser-Wäsche zur Entfernung von Ammoniak, besteht dabei die Gefahr der Eisbildung im Rohsynthesegas, was unbedingt zu vermeiden ist. Aus diesem Grund wird dem Rohsynthesegas eine zur Verhinderung der Eisbildung ausreichende Menge an Methanol zugesetzt, bevor es der Absorptionskolonne zugeführt wird. Das der Absorptionskolonne zugeführte Rohsynthesegas weist also bereits eine bestimmte Menge an Methanol und vor allem Wasser auf.

Die Anwesenheit von Wasser in der Absorptionskolonne führt in der Regel zu einem höheren Methanol-Bedarf in den verschiedenen Methanol-Kreisläufen und damit zu einem höheren Betriebsmittel-Bedarf. Ein höherer Verbrauch an Betriebsmitteln, insbesondere von Kältemittel, Dampf, elektrischer Energie und Kühlwasser führt dementsprechend zu höheren Betriebskosten (OPEX).

Der höhere Wassergehalt in den Methanol-Kreisläufen führt ferner zu höheren Gesamt-Durchflussraten in den Methanol-Kreisläufen und damit zu höheren Dampf-Durchflussraten in den Sektionen für die Heißregeneration und für die Methanol-Wasser-Trennung (Rektifikation) des Rectisol-Verfahrens. Dies erfordert eine grö-ßere Dimensionierung verschiedener Anlagenbauteile innerhalb des Rectisol-Prozesses, was zu erhöhten Kapitalkosten (CAPEX) führt.

DE 196 10 846 A1 offenbart ein Verfahren zur Entfernung von Cyanwasserstoff aus Gasen, die Schwefelwasserstoff und andere saure Komponenten, wie Kohlendioxid und Carbonylsulfid, enthalten. Das Verfahren umfasst (i) physikalisches Waschen des Gases zur Entfernung von Schwefelwasserstoff und den anderen sauren Komponenten unter Verwendung eines Waschmittels, das regeneriert und in dem Verfahren wiederverwendet wird; (ii) gleichzeitiges Auswaschen von Cyanwasserstoff mit Schwefelwasserstoff und den sauren Komponenten; und (iii) Zugabe von Schwefeldioxid und gegebenenfalls erforderlichem Ammoniak und/oder Alkali zu dem Waschmittel und Entfernen der aus dem Waschmittel gebildeten Rhodanide.

DE 10 2013 010103 offenbart ein Verfahren sowie eine Vorrichtung zur Abtrennung von Metallcarbonylen aus einem Gasgemisch durch Gaswäsche mit einem physikalisch wirkenden Waschmittel, wobei in der Wäsche mit Metallcarbonylen beladenes Waschmittel regeneriert und anschließend wieder zur Abtrennung von Metallcarbonylen eingesetzt wird. Dabei werden zur Regenerierung des beladenen Waschmittels im Waschmittel gelöste Stoffe nur soweit abgetrennt, als dies für die Entfernung der Metallcarbonyle erforderlich ist.

EP 0 270 040 offenbart ein Verfahren zur Rückgewinnung von Kohlendioxid aus einem Lösungsmittel, das bei der Reinigung eines Gasstroms in einer Absorptionskolonne verwendet wird. Dabei wird ein Druck von weniger als 0,35 bar (5 psi) in einer Flash-Kolonne verwendet, um mehr als 96 Prozent des Kohlendioxids zu entfernen. Die Regenerierung des Lösungsmittels für das Recycling wird je nach den Anforderungen des Gesamtsystems variiert.

US 2015/321136 A1 offenbart ein Kohlendioxid-Rückgewinnungssystem, umfassend eine Absorptionskolonne, eine Regenerationskolonne, sowie eine Kompressionsvorrichtung und eine Flash-Kolonne.

DE 17 94 060 betrifft die selektive Entfernung von Bestandteilen wie Kohlendioxid oder Schwefelwasserstoff aus gasförmigen Gemischen. Dabei wird in einem mittleren Teil eines Absorbers ein kaltes regeneriertes Absorptionsmittel eingespeist, während in einem oberen Teil des Absorbers zusätzlich ein warmes regeneriertes Absorptionsmittel eingespeist wird.

US 2013/036911 A1 offenbart eine Anlage zur Behandlung von Synthesegas die so konfiguriert ist, dass schwefelhaltige Verbindungen aus dem Synthesegas in einer Konfiguration mit zwei Flash-Stufen für ein physikalisches Lösungsmittel entfernt werden, um das saure Gas auf mindestens 40 Molprozent Schwefelwasserstoff oder mehr anzureichern, wie es von einer Claus-Anlage benötigt wird, und um Kohlendioxid zu flashen und zurück in die Synthesegaszufuhr zu führen.

US 2019/001256 A1 offenbart ein Absorptionsverfahren zur Abtrennung von Komponenten eines verunreinigten Einsatzgases, welches zwei Stufen der Gasreinigung umfasst. Die sauren Gase, einschließlich Schwefelwasserstoff, Kohlendioxid und andere Schwefelverbindungen, werden in zwei Stufen durch Kontakt mit einem physikalischen Lösungsmittel gleichzeitig aus dem Einsatzgas entfernt.

EP 3 628 392 A1 offenbart ein Gaswäsche-Verfahren zur Reinigung von Syntheserohgas mit Methanol als physikalisch wirkendem Absorptionsmittel, bei dem ein zumindest Schwefelwasserstoff (H₂S) aufweisendes Sauergas erzeugt wird. Das Sauergas wird in einem einer Absorptionsvorrichtung nachgeschalteten Heißregenerator erzeugt und anschließend in einem Sauergas-Abscheider durch Kühlung und Kondensation von gasförmigem Methanol getrennt. Der Sauergas-Abscheider verfügt über einen Kondensationsbereich und einen Absorptionsbereich, wobei beide Bereiche durch einen gasdurchlässigen Boden voneinander separiert sind. Dadurch werden aus einem ersten Sauergas-Teilstrom ausgasende Verunreinigungen wie Cyanwasserstoff und/oder Ammoniak nicht im Kondensationsbereich des Sauergas-Abscheiders reabsorbiert, wodurch eine Anreicherung von Verunreinigungen im Heißregenerator oder anderen Teilen der Gaswäsche-Anlage vermieden wird.

### Beschreibung der Erfindung

Es besteht somit Bedarf für verbesserte Verfahren.

Allgemein ist es eine Aufgabe der vorliegenden Erfindung, die vorgenannten Nachteile des Standes der Technik zu überwinden.

Eine weitere Aufgabe der Erfindung besteht darin, die Konzentration von Wasser in den Methanol-Kreisläufen des Rectisol-Verfahrens soweit wie möglich zu minimieren.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur Reinigung von Rohsynthesegas durch physikalische Absorption in Methanol, wobei das Verfahren die folgenden Prozessschritte umfasst, wobei die folgenden Prozessschritte nicht zwingend in der vorgegebenen Reihenfolge auszuführen sind:
(a) Bereitstellen eines Rohsynthesegasstroms, wobei das Rohsynthesegas des Rohsynthesegasstroms als erwünschte Bestandteile Wasserstoff (H₂) und Kohlenmonoxid (CO) aufweist, sowie als unerwünschte Bestandteile Wasser (H₂O) und Sauergase aufweist;
(b) Versetzen des Rohsynthesegasstroms mit Methanol;
(c) Kühlen des mit Methanol versetzten Rohsynthesegasstroms unter den Gefrierpunkt von Wasser;
(d) Abscheiden einer flüssigen Phase aus dem gekühlten Rohsynthesegasstrom, wobei die flüssige Phase Methanol und Wasser aufweist und die verbleibende gasförmige Phase Wasserstoff, Kohlenmonoxid und Sauergase aufweist;
(e) Abtrennen der Sauergase aus der gemäß Schritt (d) erhaltenen gasförmigen Phase durch physikalische Absorption in Methanol bei erhöhtem Druck, wodurch ein gereinigter Synthesegasstrom erhalten wird, sowie ein mit Sauergasen beladener Methanolstrom erhalten wird;
(f) Regenerieren des mit Sauergasen beladenen Methanolstroms, wobei ein regenerierter Methanolstrom und ein Sauergasstrom erhalten werden;
(g) Wiederverwenden des gemäß Schritt (f) erhaltenen regenerierten Methanolstroms zum Abtrennen von Sauergasen durch physikalische Absorption in Methanol gemäß Schritt (e), wobei

die gemäß Schritt (d) erhaltene flüssige Phase einer Strippung unterzogen wird, wodurch in der flüssigen Phase gelöste Gase zumindest teilweise aus der flüssigen Phase desorbiert werden, wodurch ein durch Strippung der flüssigen Phase erzeugter Strom desorbierter Gase erhalten wird, wobei
Methanol-Dampf als Stripp-Medium verwendet wird, und wobei
das Regenerieren des mit Sauergasen beladenen Methanolstroms gemäß Schritt (f) zumindest teilweise durch Abtrennen von Wasser aus Methanol durch ein thermisches Trennverfahren erfolgt, wobei der bei dem thermischen Trennverfahren erzeugte Methanol-Dampf als das Stripp-Medium verwendet wird.

Die physikalische Absorption der Sauergase findet bei erhöhtem Druck in kaltem bis tiefkaltem Methanol statt, wobei das Methanol für die Absorption auf Temperaturen von bis zu -75 °C, wie unten beschrieben, abgekühlt wird.

Der gemäß Schritt (b) mit Methanol versetzte Rohsynthesegasstrom wird gemäß Schritt (c) zunächst unter den Gefrierpunkt von Wasser abgekühlt. Die Abkühlung kann dabei bis zu einer Temperatur von -40 °C erfolgen. In einem Beispiel wird der Rohsynthesegasstrom gegen gereinigtes Synthesegas abgekühlt. Nach der Abkühlung des Methanol und Wasser aufweisenden Rohsynthesegasstroms wird gemäß Schritt (d) eine flüssige Phase, welche Methanol und Wasser aufweist, aus dem Rohsynthesegasstrom abgeschieden. In einem Beispiel findet die Abscheidung der flüssigen oder kondensierten Methanol-Wasser-Phase in einem dem Fachmann bekannten Abscheider statt. Durch diesen Prozessschritt wird verhindert, dass Wasser aus dem Rohsynthesegas in den eigentlichen Absorptionsschritt gemäß (e) eingetragen wird. Dadurch wird die sich in den Methanol-Kreisläufen befindende Wassermenge signifikant reduziert.

Eine Ausführungsform des erfindungsgemäßen Verfahrens ist dadurch gekennzeichnet, dass die gemäß Schritt (d) erhaltene flüssige Phase einer Drucksenkung (Flashen) unterzogen wird, wodurch in der flüssigen Phase gelöste Gase zumindest teilweise aus der flüssigen Phase desorbiert werden, wodurch ein durch Flashen der flüssigen Phase erzeugter Strom desorbierter Gase erhalten wird.

Gemäß Schritt (d) des erfindungsgemäßen Verfahrens wird ein Großteil des Rohsynthesegases, welches im Wesentlichen Wasserstoff, Kohlenmonoxid und Sauergase aufweist, von der flüssigen Phase (Methanol-Wasser-Phase) durch Abscheidung letzterer getrennt und kann dem Absorptionsschritt (e) zugeführt werden. Ein nicht zu vernachlässigender Anteil an Gasen bleibt jedoch in der Methanol-Wasser-Phase gelöst und kann durch Drucksenkung aus der Methanol-Wasser-Phase desorbiert werden.

In diesem Zusammenhang ist bevorzugt, dass der durch Flashen der flüssigen Phase erzeugte Strom desorbierter Gase dem gemäß Schritt (f) erhaltenen Sauergasstrom zugeführt wird.

Die gemäß Schritt (f) durch Regeneration erhaltenen Sauergase werden anschließend nicht mehr in einen der Methanol-Kreisläufe zurückgeführt. Vorzugsweise wird daher auch der durch Flashen der flüssigen Phase erzeugte Strom desorbierter Gase, welcher auch Kohlendioxid als Sauergas enthalten kann, zum gemäß Schritt (f) erhaltenen Sauergasstrom zurückgeführt. Dadurch wird verhindert, dass Komponenten des durch Flashen der flüssigen Phase erzeugten Stroms desorbierter Gase in einen der Methanol-Kreisläufe zurückgelangen.

In diesem Zusammenhang ist bevorzugt, dass der Sauergasstrom gemäß Schritt (f) zumindest teilweise durch Heißregenerieren des mit Sauergasen beladenen Methanolstrom erhalten wird, und der durch Heißregenerieren erhaltene Sauergasstrom gasförmiges Methanol enthält, und das gasförmige Methanol durch Kühlen aus dem Sauergasstrom abgeschieden wird, wobei der durch Flashen der flüssigen Phase erzeugte Strom desorbierter Gase dem durch Heißregenerieren erhaltenen Sauergasstrom vor dem Abscheiden des Methanols, beim Abscheiden des Methanols oder nach dem Abscheiden des Methanols zugeführt wird.

Der letzte Schritt einer Kaskade von Schritten zur Regenerierung von Methanol ist häufig eine Heißregenerierung, bei der der Eigendampf des Absorptionsmittels (Methanol) als Stripp-Gas verwendet wird. Das mit Sauergasen beladene Methanol wird also zumindest teilweise durch Heißregenerieren von den Sauergasen befreit. Der bei der Heißregenerierung erhaltene Sauergasstrom enthält in der Regel einen gewissen Anteil Methanol-Dampf, welcher beispielsweise in einem Abscheider von den Sauergasen getrennt wird. Die Gase des durch Flashen der flüssigen Phase erzeugten Stroms desorbierter Gase können dem gemäß Schritt (f) erhaltenen Sauergasstrom vor dem Abscheiden des Methanols, dabei oder danach zugeführt werden, da der durch die vorherige Druckentspannung erhaltene Strom desorbierter Gase in der Regel kein oder sehr wenig Methanol enthält. Sollte dies doch der Fall sein, wird der durch Flashen der flüssigen Phase erzeugte Strom desorbierter Gase dem gemäß Schritt (f) erhaltenen Sauergasstrom in vorteilhafter Weise vor oder bei der Abscheidung des Methanols zugeführt, um das im durch Flashen der flüssigen Phase erzeugten Strom desorbierter Gase enthaltene Methanol zusammen mit dem Methanol aus dem der Heißregenerierung entnommenen Sauergasstrom abzuscheiden.

Eine Ausführungsform des erfindungsgemäßen Verfahrens ist dadurch gekennzeichnet, dass der durch Flashen der flüssigen Phase erzeugte Strom desorbierter Gase auf Absorptionsdruck verdichtet wird, und anschließend Schritt (e) zum Abtrennen von Sauergasen aus dem durch Flashen der flüssigen Phase erzeugten Strom desorbierter Gase durch physikalische Absorption in Methanol zugeführt wird.

Alternativ kann der durch Flashen der flüssigen Phase erzeugte Strom desorbierter Gase anstatt dem gemäß Schritt (f) erhaltenen Sauergasstrom zunächst auf Absorptionsdruck verdichtet werden, beispielsweise durch einen sogenannten Recyclegas-Kompressor, um anschließend der Absorption in Methanol gemäß Schritt (e) zugeführt zu werden. Dieses Vorgehen ist dann bevorzugt, wenn der Anteil an Wertgasen, also Wasserstoff und Kohlenmonoxid, im durch Flashen der flüssigen Phase erzeugten Strom desorbierter Gase relativ hoch ist. Diese Wertgase werden dadurch dem gemäß Schritt (e) erhaltenen gereinigten Synthesegasstrom zugeführt und gehen nicht mit dem Sauergasstrom gemäß vorgenannter Vorgehensweise verloren.

Eine Ausführungsform des erfindungsgemäßen Verfahrens ist dadurch gekennzeichnet, dass der Sauergasstrom gemäß Schritt (f) zumindest teilweise durch Drucksenkung (Flashen) des mit Sauergasen beladenen Methanol erhalten wird, und der durch Flashen der flüssigen Phase erzeugte Strom desorbierter Gase diesem durch Drucksenkung erhaltenen Sauergasstrom zugeführt wird.

Zumindest ein Schritt einer Kaskade von Schritten zur Regenerierung von Methanol ist häufig durch eine Drucksenkung, auch als Flashen bezeichnet, gekennzeichnet. Dabei wird das bei Absorptionsdruck mit Sauergasen beladene Methanol einer Drucksenkung oder mehreren Drucksenkungen hintereinander, mit von Stufe zu Stufe sinkendem Druck, unterworfen. Dabei werden außer den in Methanol absorbierten Sauergasen regelmäßig auch in Methanol co-absorbierte Wertgase (Wasserstoff, Kohlenmonoxid) freigesetzt. Aufgrund dessen können die durch Flashen desorbierten Sauergase und Wertgase in vorteilhafter Weise zumindest teilweise auf Absorptionsdruck rückverdichtet und der Absorption gemäß Schritt (e) zugeführt werden, um den Verlust an Wertgasen zu minimieren. Wird der durch Flashen der flüssigen Phase erzeugte Strom desorbierter Gase dem durch Drucksenkung erhaltenen Sauergasstrom zugeführt, werden auch die im durch Flashen der flüssigen Phase erzeugten Strom desorbierter Gase enthaltenen Wertgase entsprechend recycelt und gehen nicht verloren.

Das Verfahren gemäß der Erfindung beinhaltet, dass die gemäß Schritt (d) erhaltene flüssige Phase einer Strippung unterzogen wird, wodurch in der flüssigen Phase gelöste Gase zumindest teilweise aus der flüssigen Phase desorbiert werden, wodurch ein durch Strippung der flüssigen Phase erzeugter Strom desorbierter Gase erhalten wird.

Im Rahmen der Erfindung kann auch von einem "ersten Strom desorbierter Gase" die Rede sein, wenn damit ein Strom desorbierter Gase gemeint ist, der durch Drucksenkung (Flashen) derflüssigen Phase erzeugt wird. Im Rahmen der Erfindung kann auch von einem "zweiten Strom desorbierter Gase" die Rede sein, wenn damit ein Strom desorbierter Gase gemeint, der durch Strippung der flüssigen Phase erzeugt wird.

Alternativ zu einer einfachen Drucksenkung (Flashen) kann die gemäß Schritt (d) erhaltene flüssige Phase (Methanol-Wasser-Phase) auch einer Strippung unterzogen werden. Beim Strippen werden absorbierte Gase durch ein in die flüssige Phase eingeleitetes Stripp-Gas desorbiert, wobei das Strippen mit oder ohne Drucksenkung erfolgen kann. Geeignete Stripp-Gase sind dem Fachmann bekannt.

Gemäß einer Ausführungsform des erfindungsgemäßen Verfahren wird die gemäß Schritt (d) erhaltene flüssige Phase zunächst einer Drucksenkung unterzogen, wie vorstehend beschrieben, und anschließend einer Strippung unterzogen, ebenfalls wie vorstehend beschrieben.

Das Verfahren gemäß der Erfindung beinhaltet weiterhin, dass Methanol-Dampf als Stripp-Medium verwendet wird.

Wird Methanol-Dampf als Stripp-Medium zum Strippen der gemäß Schritt (d) erhaltenen flüssigen Phase verwendet, kann auf die Zufuhr eines gesondert für die Strippung bereitzustellenden Stripp-Gases verzichtet werden.

Das Verfahren gemäß der Erfindung beinhaltet weiterhin, dass das Regenerieren des mit Sauergasen beladenen Methanol-Stroms gemäß Schritt (f) zumindest teilweise durch Abtrennen von Wasser aus Methanol durch ein thermisches Trennverfahren, wobei bei dem thermischen Trennverfahren erzeugter Methanol-Dampf als Stripp-Medium verwendet wird.

Zumindest ein Schritt einer Kaskade von Schritten zur Regenerierung von Methanol ist regelmäßig durch ein thermisches Trennverfahren, beispielsweise eine Rektifikation, zur Trennung von Methanol und Wasser gekennzeichnet, da sich der Eintrag von Wasser in die Methanol-Absorptionskolonne auch im Rahmen des erfindungsgemäßen Verfahrens üblicherweise nicht vollständig vermeiden lässt. Der dabei am Kopf der Methanol-Wasser-Trennkolonne anfallende Methanol-Dampf lässt sich in vorteilhafter Weise als Stripp-Medium für die flüssige Phase verwenden, um den durch Strippung der flüssigen Phase erzeugten Strom desorbierter Gase zu erzeugen. Es ist in diesem Fall kein zusätzlicher technischer Aufwand für die Erzeugung eines Stripp-Gases erforderlich, da Methanol-Dampf bei der thermischen Trennung von Methanol und Wasser in jedem Fall erzeugt wird.

Ein Aspekt des erfindungsgemäßen Verfahrens ist dadurch gekennzeichnet, dass der durch Strippung der flüssigen Phase erzeugte Strom desorbierter Gase dem gemäß Schritt (f) erhaltenen Sauergasstrom zugeführt wird.

Wie vorstehend beschrieben werden die gemäß Schritt (f) durch Regeneration erhaltenen Sauergase anschließend nicht mehr in einen der Methanol-Kreisläufe zurückgeführt. Vorzugsweise wird daher auch der durch Strippung der flüssigen Phase erzeugte Strom desorbierter Gase, welcher auch Kohlendioxid als Sauergas enthalten kann, zum gemäß Schritt (f) erhaltenen Sauergasstrom zurückgeführt. Dadurch wird verhindert, dass Komponenten des durch Strippung der flüssigen Phase erzeugten Stroms desorbierter Gase in einen der Methanol-Kreisläufe zurückgelangen.

In diesem Zusammenhang ist bevorzugt, dass der Sauergasstrom gemäß Schritt (f) zumindest teilweise durch Heißregenerieren des mit Sauergasen beladenen Methanol erhalten wird, und der durch Heißregenerieren erhaltene Sauergasstrom gasförmiges Methanol enthält, und das gasförmige Methanol durch Kühlen aus dem Sauergasstrom abgeschieden wird, wobei der durch Strippung der flüssigen Phase erzeugte Strom desorbierter Gase dem durch Heißregenerieren erhaltenen Sauergasstrom vor dem Abscheiden des Methanols, beim Abscheiden des Methanols oder nach dem Abscheiden des Methanols zugeführt wird.

Die Gase des durch Strippung der flüssigen Phase erzeugten Stroms desorbierter Gase können dem gemäß Schritt (f) erhaltenen Sauergasstrom vor dem Abscheiden des Methanols, dabei oder danach zugeführt werden, davon abhängig ob der durch die vorherige Strippung erhaltene Strom desorbierter Gase über einen hohen oder niedrigen Anteil Methanol verfügt. Wird gemäß der Erfindung Methanol-Dampf als Stripp-Medium verwendet, wird der durch Strippung der flüssigen Phase erzeugte Strom desorbierter Gase dem gemäß Schritt (f) erhaltenen Sauergasstrom in vorteilhafter Weise vor oder bei der Abscheidung des Methanols zugeführt, um das im durch Strippung der flüssigen Phase erzeugten Strom desorbierter Gase durch die Strippung mitgeschleppte Methanol mit abzuscheiden.

Ein Aspekt des erfindungsgemäßen Verfahrens ist dadurch gekennzeichnet, dass die flüssige Phase nach der Strippung dem thermischen Trennverfahren zur Trennung von Methanol und Wasser zugeführt wird. Vorzugsweise wird die flüssige Phase nach der Strippung dem thermischen Trennverfahren zugeführt, das auch für das zumindest teilweise Regenerieren des mit Sauergasen beladenen Methanol-Stroms gemäß Schritt (f) durch Abtrennen von Wasser aus Methanol verwendet wird. Vorzugsweise wird das Wasser aus der flüssigen Phase, also der Methanol-Wasser-Phase, der gleichen Trennkolonne zugeführt, die auch für die Methanol-Wasser-Trennung des Hauptmethanolstroms verwendet wird.

Ein Aspekt des erfindungsgemäßen Verfahrens ist dadurch gekennzeichnet, dass der Rohsynthesegasstrom Ammoniak (NH₃) als unerwünschten Bestandteil aufweist, und das Ammoniak vor Schritt (b) zumindest teilweise durch Waschen mit Wasser aus dem Rohsynthesegasstrom entfernt wird, und die erhaltene wässrige Ammoniak-Lösung vom Rohsynthesegasstrom abgetrennt wird.

Je nach Quelle kann das Rohsynthesegas auch Ammoniak als Verunreinigung enthalten. Ammoniak stellt kein Sauergas dar, und wird aufgrund seines basischen Charakters daher vorzugsweise vor Schritt (b) aus dem Rohsynthesegas abgetrennt. Andernfalls kann Ammoniak im Rahmen der Methanol-Wäsche mit Sauergasen zu Ammonium-Salzen reagieren, die aufgrund ihrer begrenzten Löslichkeit in Methanol, insbesondere in kaltem Methanol, in den Methanol-Kreisläufen zu festen Ablagerungen führen können.

In diesem Zusammenhang ist ein Aspekt des erfindungsgemäßen Verfahrens dadurch gekennzeichnet, dass der zumindest teilweise von Ammoniak befreite Rohsynthesegasstrom zum Kondensieren von im Rohsynthesegasstrom verbliebener wässriger Ammoniak-Lösung vor Schritt (b) gekühlt wird, und die aus dem Rohsynthesegasstrom auskondensierte wässrige Ammoniak-Lösung vor Schritt (b) aus dem Rohsynthesegasstrom abgeschieden wird.

Bei der Ammoniak-Wäsche wird das als Absorptionsmittel verwendete Wasser üblicherweise in einer Waschkolonne im Gegenstrom zum zu reinigenden Rohsynthesegasstrom geführt und die resultierende wässrige Ammoniak-Lösung am Boden der Waschkolonne abgezogen. Das am Kopf der Waschkolonne abgezogene Rohsynthesegas enthält in der Regel noch Restmengen an wässriger Ammoniak-Lösung. Das Rohsynthesegas wird daher vorzugsweise vor Schritt (b) des erfindungsgemäßen Verfahrens gekühlt, um diese Restmengen anschließend aus dem Rohsynthesegas abscheiden zu können.

Die Aufgaben der Erfindung werden weiterhin zumindest teilweise gelöst durch eine Anlage zur Reinigung von Rohsynthesegas durch physikalische Absorption in Methanol, insbesondere zur Durchführung des erfindungsgemäßen Verfahrens gemäß einer der vorgenannten Ausführungsformen, wobei die Anlage folgende miteinander in Fluidverbindung stehende Komponenten umfasst:
(a) Mittel zum Erzeugen eines Rohsynthesegasstroms, wobei das Rohsynthesegas des Rohsynthesegasstroms als erwünschte Bestandteile Wasserstoff (H₂) und Kohlenmonoxid (CO) aufweist, sowie als unerwünschte Bestandteile Wasser (H₂O) und Sauergase aufweist;
(b) Mittel zum Versetzen des Rohsynthesegasstroms mit Methanol;
(c) Mittel zum Kühlen des mit Methanol versetzten Rohsynthesegasstroms unter den Gefrierpunkt von Wasser;
(d) Mittel zum Abscheiden einer flüssigen Phase aus dem gekühlten Rohsynthesegasstrom, wobei die flüssige Phase Methanol und Wasser aufweist und die verbleibende gasförmige Phase Wasserstoff, Kohlenmonoxid und Sauergase aufweist;
(e) Mittel zum Abtrennen der Sauergase aus der gemäß (d) erhältlichen gasförmigen Phase durch physikalische Absorption in Methanol bei erhöhtem Druck, wodurch ein gereinigter Synthesegasstrom erhältlich ist, sowie ein mit Sauergasen beladener Methanolstrom erhältlich ist;
(f) Mittel zum Regenerieren des mit Sauergasen beladenen Methanolstroms, wobei ein regenerierter Methanolstrom und ein Sauergasstrom erhältlich sind;
(g) Mittel zum Wiederverwenden des gemäß (f) erhältlichen regenerierten Methanolstroms zum Abtrennen von Sauergasen durch physikalische Absorption in Methanol gemäß (e), wobei

den Mitteln gemäß (d) eine Stripp-Vorrichtung nachgeschaltet ist, wobei in der flüssigen Phase gelöste Gase durch die Stripp-Vorrichtung zumindest teilweise aus der flüssigen Phase desorbierbar sind, wodurch ein Strom desorbierter Gase durch Strippung der flüssigen Phase erhältlich ist, und
die Anlage eine Vorrichtung zur thermischen Trennung von Methanol und Wasser umfasst, und die bei der thermischen Trennung von Methanol und Wasser erhältlichen Methanol-Dämpfe als Stripp-Medium in der Stripp-Vorrichtung verwendbar sind.

Eine Ausführungsform der erfindungsgemäßen Anlage ist dadurch gekennzeichnet, dass den Mitteln gemäß (d) eine Drucksenkungsvorrichtung nachgeschaltet ist, wobei in der flüssigen Phase gelöste Gase durch die Drucksenkungsvorrichtung zumindest teilweise aus der flüssigen Phase desorbierbar sind, wodurch ein Strom desorbierter Gase durch Drucksenkung erhältlich ist.

Die erfindungsgemäße Anlage beinhaltet, dass den Mitteln gemäß (d) eine Stripp-Vorrichtung nachgeschaltet ist, wobei in der flüssigen Phase gelöste Gase durch die Stripp-Vorrichtung zumindest teilweise aus der flüssigen Phase desorbierbar sind, wodurch ein Strom desorbierter Gase durch Strippung erhältlich ist.

Die erfindungsgemäße Anlage beinhaltet, dass die Anlage eine Vorrichtung zur thermischen Trennung von Methanol und Wasser umfasst, und die bei der thermischen Trennung von Methanol und Wasser erhältlichen Methanol-Dämpfe als Stripp-Medium in der Stripp-Vorrichtung verwendbar sind.

Eine Ausführungsform der erfindungsgemäßen Anlage ist dadurch gekennzeichnet, dass die Stripp-Vorrichtung und die Vorrichtung zur thermischen Trennung von Methanol und Wasser in einer gemeinsamen Kolonne integriert sind.

Die Stripp-Vorrichtung und die Vorrichtung zur thermischen Trennung können in vorteilhafter Weise in einer gemeinsamen Kolonne integriert werden, wenn die bei der thermischen Trennung von Methanol und Wasser anfallenden Methanol-Dämpfe in der Stripp-Vorrichtung verwendet werden. Beispielsweise kann die Stripp-Vorrichtung durch einen Kamin-Boden oder einen ähnlichen gasdurchlässigen Boden, auf dem Flüssigkeit gesammelt werden kann, von der Vorrichtung zur thermischen Trennung getrennt werden. Die Methanol-Dämpfe aus der Vorrichtung zur thermischen Trennung steigen dann durch den Kaminboden nach oben und gelangen in die Stripp-Vorrichtung, in der sich die flüssige Phase (Methanol-Wasser-Phase) auf dem Kaminboden sammelt und durch die aufsteigenden Methanol-Dämpfe von den in der flüssigen Phase verbliebenen Gasen befreit werden. Eine solche integrierte Lösung ist kostengünstiger als zwei separate, einzeln stehende Kolonnen.

Die Aufgaben der Erfindung werden weiterhin zumindest teilweise gelöst durch die Verwendung der erfindungsgemäßen Anlage nach einer der vorstehenden Ausführungsformen in einem erfindungsgemäßen Verfahren nach einem der vorstehenden Ausführungsformen.

### Sauergase

Unter Sauergasen werden zusammenfassend diejenigen unerwünschten gasförmigen Bestandteile eines Rohsynthesegases verstanden, die in wässriger Lösung sauer reagieren würden. Es sind dies insbesondere die Gase Schwefelwasserstoff (H₂S), Carbonylsulfid (COS, reagiert in Wasser zu Kohlendioxid und Schwefelwasserstoff), Kohlendioxid (CO₂), sowie Cyanwasserstoff (HCN).

### Gereinigtes Synthesegas, gereinigter Synthesegasstrom

Das gereinigte Synthesegas ist ein von unerwünschten Bestandteilen oder Begleitstoffen befreites Rohsynthesegas. Je nach Anforderung ist es nicht unbedingt erforderlich, unerwünschte Bestandteile vollständig aus dem Rohsynthesegas zu entfernen, um spezifikationsgerechtes Synthesegas zu erhalten. Insbesondere ist die vollständige Entfernung von Kohlendioxid nicht in jedem Fall erwünscht, da beispielsweise bei der Methanolsynthese bestimmte Restmengen an Kohlendioxid die Kinetik der katalytischen Umsetzung begünstigen.

### Unerwünschte Bestandteile

Im Rohsynthesegas unerwünschte Bestandteile oder Begleitstoffe sind beispielsweise die vorgenannten Sauergase, sowie potentielle Katalysatorgifte wie Alkylmercaptane, insbesondere Methylmercaptan und Kohlenstoffdisulfid, sowie aromatische heterocyclische Schwefelverbindungen, insbesondere Thiophen. Insbesondere Alkylmercaptane und aromatische heterocyclische Schwefelverbindungen treten bei Rohsynthesegasen aus Kohlevergasung auf. Weitere im Rohsynthesegas möglicherweise vorhandene Begleitstoffe sind Verbindungen wie Ammoniak sowie Metallcarbonyle, die als gasförmige oder leicht flüchtige flüssige Verbindungen aus in Kohle vorkommenden Metallionen und Kohlenmonoxid entstehen können. In den Metallcarbonylen ist Kohlenmonoxid koordinativ an ein zentrales Metallatom gebunden ist. Metallcarbonyle können insbesondere aufgrund ihrer Neigung, mit Schwefelwasserstoff zu reagieren und schwerlösliche Metallsulfide zu bilden, zu Problemen führen. Zu den in industriellen Gaswäscheverfahren auftretenden Metallcarbonylen zählen insbesondere Nickel-Carbonyle sowie Eisen-Carbonyle.

Weitere mögliche Begleitstoffe sind bei Normaldruck gasförmige sowie leichtsiedende und höhersiedende aliphatische, alicylische und aromatische Kohlenwasserstoffverbindungen. Zu den aromatischen Kohlenwasserstoffverbindungen zählen insbesondere Benzol, Toluol sowie Xylole (ortho-, meta- und para-Xylol), sowie Naphthalin. Zu den gasförmigen sowie leicht- und höhersiedenden aliphatischen und alicyclischen Kohlenwasserstoffen zählen insbesondere die homologe Reihe der (Cyclo-)Alkane, sowie in geringem Umfang Alkene und Alkine, beispielsweise mit einer Zahl von 1 bis 12 Kohlenstoffatomen, insbesondere mit einer Zahl von 1 bis 6 Kohlenstoffatomen.

### Erhöhter Druck

Die Absorption der unerwünschten Begleitstoffe im Waschmittel erfolgt unter erhöhtem Druck, da der Absorptionskoeffizient mit steigendem Druck größer wird. Die Absorption erfolgt daher üblicherweise bei Drücken zwischen 20 und 100 bar.

### Regenerieren

Zur Entfernung der unerwünschten Begleitstoffe aus dem Waschmittel, zur Regenerierung des Waschmittels, wird der Druck üblicherweise auf 1,5 bis 70 bar abgesenkt, je nachdem ob es sich um eine Hochdruckregenerierung (20 bis 70 bar), Mitteldruckregenerierung (15 bis 40 bar) oder Niederdruckregenerierung (0 bis 15 bar, vorzugsweise 1,5 bis 15 bar) handelt. In einem Beispiel sind entsprechende Regenerierungskolonnen kaskadisch hintereinander angeordnet, wobei der Druck von Kolonne zu Kolonne kleiner wird.

In einer Regenerierungskolonne können die unerwünschten Begleitstoffe entweder ausschließlich durch Druckabsenkung (Flashen), mit oder ohne Druckabsenkung in Verbindung mit einem Strippgas (Strippen), oder durch Heißregenerierung entfernt werden. Ein Beispiel für eine geeignetes Strippgas ist Stickstoff. Bei der Heißregenerierung wird üblicherweise der Eigendampf des Waschmittels, beispielsweise Methanol, als Strippgas genutzt.

### Physikalische Absorption

Physikalische Absorption wird durch ein physikalisch wirkendes Waschmittel bewirkt. Das heißt die Löslichkeit des betreffenden Gases, beispielsweise des unerwünschten Begleitstoffes, wird durch physikalische Wechselwirkungen bewirkt.

Die Aufnahme der unerwünschten Begleitstoffe erfolgt im Falle physikalisch wirkender Waschmittel vorzugsweise durch kalte, unter Umgebungstemperatur abgekühlte Waschmittel als Absorbens, da der Absorptionskoeffizient für die unerwünschten Bestandteile mit sinkender Temperatur des Waschmittels größer wird. Dabei erfolgt in einer Absorptionskolonne, auch als Waschkolonne bezeichnet, ein intensiver Stoffaustausch zwischen dem Rohsynthesegas und dem Waschmittel. Die Absorptionskolonne, in welcher sich das Rohsynthesegas und das Waschmittel im Gegenstrom zueinander bewegen, kann mit Füllkörpern oder Böden zur Verbesserung des Stoffaustauschs versehen sein.

Erfindungsgemäß handelt es sich bei dem Absorbens um Methanol, das als kaltes Methanol vorzugsweise auf bis zu -30 °C, bis zu -40 °C, bis zu -50 °C, bis zu -60 °C oder sogar bis zu -75 °C abgekühlt wird. Methanol hat den Vorteil, dass dessen Viskosität selbst bei extrem niedrigen Temperaturen nur so hoch ist, dass es verfahrenstechnisch problemlos verarbeitet werden kann.

### Ausführungsbeispiel

Die Erfindung wird im Folgenden durch ein Ausführungsbeispiel in Verbindung mit zwei Zeichnungen sowie einem Zahlenbeispiel näher erläutert, wobei das Ausführungsbeispiel, die Zeichnungen und das Zahlenbeispiel keine Beschränkung der Erfindung bedeuten. Die Zeichnungen sind, sofern nicht anders angegeben, nicht maßstabsgetreu.

Es zeigen
- Figur 1: ein Verfahrensfließbild eines erfindungsgemäßen Verfahrens oder einer erfindungsgemäßen Anlage, und
- Figur 2: ein Verfahrensfließbild eines Verfahrens oder einer Anlage gemäß Stand der Technik.

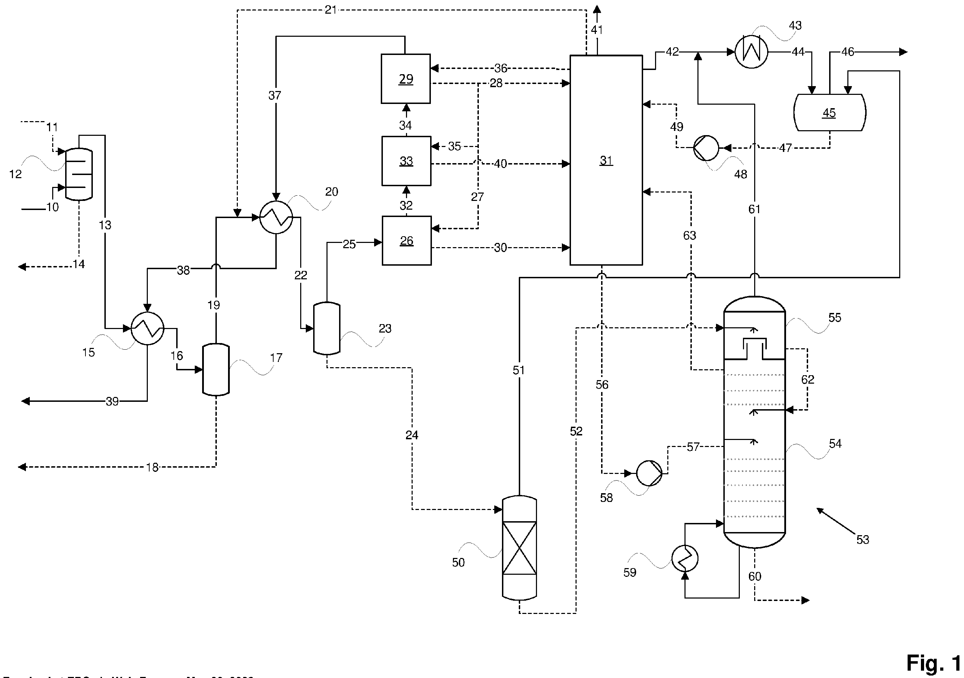

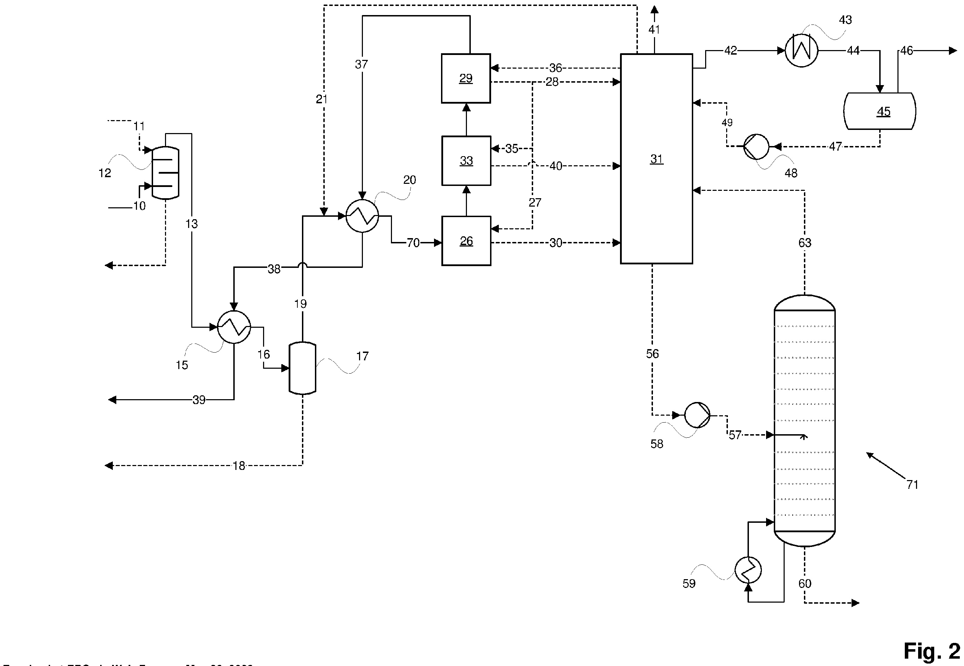

In den Figuren 1 und 2 sind Ströme von Gasen als durchgezogene Linien dargestellt, wohingegen Ströme von Flüssigkeiten als gestrichelte Linien dargestellt sind.

Figur 1 zeigt eine Ausführungsform des erfindungsgemäßen Verfahrens oder der erfindungsgemäßen Anlage mit Hilfe eines stark vereinfachten Verfahrensfließbildes.

Ein Rohsynthesegasstrom, welcher zumindest Wasserstoff, Kohlenmonoxid, Sauergase und Ammoniak enthält, wird über Leitung 10 zunächst in den Sumpfbereich eines Ammoniak-Wäschers 12 eingeleitet, der von oben nach unten mit Kesselspeisewasser durchströmt wird, welches über Leitung 11 in den Kopfbereich des Ammoniak-Wäschers 12 eingeleitet wird. Durch die Austauschvorgänge zwischen Rohsynthesegas und Wasser im Gegenstrom des Ammoniak-Wäschers 12 wird das Rohsynthesegas weitgehend von Ammoniak befreit und über Leitung 13 aus dem Ammoniak-Wäscher 12 abgezogen. Im Ammoniak-Wäscher 12 als Sumpfprodukt resultierende Waschlösung, in diesem Fall wässrige Ammoniak-Lösung, wird über Leitung 14 abgezogen und einer weiteren Aufarbeitung außerhalb des Verfahrens unterzogen (nicht gezeigt). Das Rohsynthesegas, welches als Ergebnis der Ammoniak-Wäsche in kleineren Mengen nicht kondensierte wässrige Ammoniak-Lösung enthält, wird anschließend in einem Wärmeaustauscher 15 gegen gereinigtes Synthesegas aus Leitung 38 gekühlt. Das gekühlte Rohsynthesegas wird über Leitung 16 einem Abscheider 17 zugeführt, in dem die im Rohsynthesegas verbliebene wässrige Ammoniak-Lösung nach erfolgter Kondensation von den gasförmigen Bestandteilen des Rohsynthesegases getrennt wird. Die im Abscheider 17 kondensierte wässrige Ammoniak-Lösung wird als Sumpfprodukt über Leitung 18 aus dem Abscheider 17 abgezogen und einer weiteren Aufarbeitung außerhalb des Verfahrens unterzogen (nicht gezeigt).

Das von Ammoniak weitgehend befreite Rohsynthesegas wird aus dem Abscheider 17 als Kopfprodukt abgezogen und über Leitung 19 dem Wärmeaustauscher 20 zugeführt. Vor Eintritt in den Wärmeaustauscher 20 wird das Rohsynthesegas, welches nach wie vor Wasser enthält, mit Methanol aus Leitung 21 versetzt. Im Wärmeaustauscher 20 wird das mit Methanol versetzte Rohsynthesegas anschließend auf bis zu minus 40 °C gekühlt. Durch die Zugabe des Methanols aus Leitung 21 wird verhindert, dass im Rohsynthesegas enthaltenes Wasser gefriert und dadurch Verstopfungen in den Leitungssystemen des Gaswäscheverfahrens verursachen kann.

Das mit Methanol versetzte und bis zu minus 40 °C gekühlte Rohsynthesegas wird anschließend über Leitung 22 einem Abscheider 23 zugeführt, in dem eine erfindungsgemäß flüssige Phase (Methanol-Wasser-Phase) nach erfolgter Kondensation aus dem gekühlten Rohsynthesegasstrom abgeschieden wird. Die flüssige Phase wird über Leitung 24 aus dem Abscheider 23 abgezogen, während die verbleibende gasförmige Phase des Rohsynthesegases, welche zumindest Wasserstoff, Kohlenmonoxid und Sauergase enthält, über Leitung 25 dem Absorptionsbereich des Gaswäscheverfahrens zur Entfernung der Sauergase bei erhöhtem Druck zugeführt wird.

Für die Absorption der Sauergase aus dem Rohsynthesegasstrom wird das Rohsynthesegas über Leitung 25 zunächst einer Vorwaschstufe 26 zugeführt und dort im Gegenstrom mit tiefkaltem Methanol aus Methanol-Strom 27 behandelt. Methanol-Strom 27 wird aus Methanol-Strom 28 abgezweigt und enthält bereits aus einer zweiten Hauptwaschstufe 29 absorbiertes Kohlendioxid. In der Vorwaschstufe 26 wird das Rohsynthesegas hauptsächlich von Cyanwasserstoff (HCN) befreit, gleichzeitig werden kleinere Mengen an Schwefelverbindungen, wie zum Beispiel Alkylmercaptane, sowie nicht vermeidbar auch sehr kleine Mengen Wertgase (Wasserstoff, Kohlenmonoxid) co-absorbiert. Das in der Vorwaschstufe erhaltene beladene Methanol wird über Leitung 30 dem Regenerationssystem 31 zugeführt.

Der von Cyanwasserstoff und weiteren Verbindungen befreite Rohsynthesegasstrom wird über Leitung 32 einer ersten Hauptwaschstufe 33 zugeführt. In der ersten Hauptwaschstufe 33 wird das Rohsynthesegas im Gegenstrom mit Methanol behandelt, welches als Teilstrom 35 aus Methanol-Strom 27 abgezweigt wird und bereits in der zweiten Hauptwaschstufe 29 absorbiertes Kohlendioxid enthält. In der ersten Hauptwaschstufe 33 wird das Rohsynthesegas im Wesentlichen von Schwefelwasserstoff und Carbonylsulfid befreit. Im Wesentlichen noch Kohlendioxid als unerwünschten Bestandteil aufweisendes Rohsynthesegas wird anschließend aus der ersten Hauptwaschstufe 33 abgezogen und in der zweiten Hauptwaschstufe 29 zur Absorption von Kohlendioxid mit regeneriertem Methanol aus Leitung 36 behandelt. Das vollständig gereinigte Synthesegas wird anschließend über die Leitungen 37, 38 und 39 aus dem Verfahren ausgeleitet, wobei es die Wärmeaustauscher 15 und 20 passiert und dabei zur Abkühlung des Rohsynthesegasstroms genutzt wird.

Die mit Sauergasen beladenen Methanol-Ströme 28, 30 und 40, welche aus der Vorwaschstufe 26 und den beiden Hauptwaschstufen 29 und 33 abgezogen werden, werden anschließend im Regenerationssystem 31 von den vorgenannten absorbierten Sauergas-Bestandteilen befreit. Regenerationssystem 31 umfasst zumindest mehrere als Kaskade angeordnete Flash-Regenerationsstufen, einen Heißregenerator, sowie gegebenenfalls einen Reabsorber. Für das Rectisol-Verfahren typische Schaltungen dieser Komponenten sind dem Fachmann im Allgemeinen bekannt. Die vorgenannten Komponenten sind daher zum Zwecke der Vereinfachung nicht im Einzelnen, sondern als ein Block dargestellt.

Mit Hilfe des Regenerationssystems 31 werden ein Kohlendioxid-Strom in Leitung 41, zwei Methanol-Ströme in den Leitungen 21 und 36 (jeweils regeneriertes Methanol) und ein hauptsächlich schwefelhaltige Sauergase (Schwefelwasserstoff, Carbonylsulfid) enthaltender Strom in Leitung 42 erhalten. Kohlendioxid in Leitung 41 wird aus dem Verfahren ausgeleitet und einer weiteren Verarbeitung zugeführt (nicht gezeigt). Methanol-Strom in Leitung 21 wird wie vorgehend beschrieben dem Rohsynthesegasstrom aus Leitung 19 zugesetzt, um Eisbildung im Rohsynthesegasstrom in Leitung 19 zu vermeiden. Methanol-Strom in Leitung 36 wird zur Absorption von Kohlendioxid in der zweiten Hauptwaschstufe 29 verwendet.

Der Sauergas-Strom in Leitung 42 stammt aus dem Heißregenerierungsteil des Regenerationssystems 31. Er enthält daher schwefelhaltige Sauergase, bei welchen es sich im Wesentlichen um Schwefelwasserstoff und Carbonylsulfid handelt, sowie im Zuge der Heißregenerierung nicht kondensiertes, also mitgeschlepptes Methanol. Dieses nicht kondensierte, also dampfförmige Methanol wird in Wärmeaustauscher 43 zusammen mit den schwefelhaltigen Sauergasen soweit heruntergekühlt, dass nach Weiterleitung über Leitung 44 in einen Abscheidebehälter 45 eine Kondensation des Methanols im Abscheidebehälter 45 erfolgt. Dabei gleichzeitig anfallende Sauergase, die im Abscheidebehälter anfallende gasförmige Phase, besteht im Wesentlichen aus schwefelhaltigen Sauergasen. Diese schwefelhaltigen Sauergase werden über Leitung 46 aus dem Abscheidebehälter 45 abgezogen und einer Anlage zur Rückgewinnung von Schwefel nach dem Claus-Verfahren zugeführt (nicht gezeigt). Das abgeschiedene, kondensierte Methanol wird aus dem Abscheidebehälter 45 über Leitung 47 abgezogen und mit Hilfe der Pumpe 48 über Leitung 49 in das Regenerationssystem 31 zurückgeführt.

Wie vorstehend beschrieben wird im Abscheider 23 die erfindungsgemäß flüssige Phase (Methanol-Wasser-Phase) durch Kondensation aus dem gekühlten Rohsynthesegas abgeschieden. Diese wird über Leitung 24 aus dem Abscheider 23 abgezogen und einem Flash-Behälter 50 zugeführt. Im Flash-Behälter 50 wird durch Drucksenkung erreicht, dass in der flüssigen Phase gelöste Gase zumindest teilweise aus der flüssigen Phase desorbiert werden, wodurch ein erfindungsgemäß durch Strippung der flüssigen Phase erzeugter Strom desorbierter Gase erhalten wird. Dieser durch Strippung der flüssigen Phase erzeugte Strom desorbierter Gase wird über Leitung 51 abgezogen und Abscheidebehälter 45 zugeführt. Die durch Drucksenkung in Flash-Behälter 50 desorbierten Gase werden dadurch zusammen mit den Sauergasen aus Abscheidebehälter 45 über Leitung 46 aus dem Verfahren ausgeschleust.

Die in Flash-Behälter 50 verbliebene flüssige Phase (Methanol-Wasser-Phase), welche nach wie vor absorbierte Gase enthält, wird über Leitung 52 einer kombinierten Kolonne 53 zugeführt, welche über einen Bereich zur thermischen Trennung von Methanol durch Rektifikation 54 sowie einen Stripp-Bereich 55 verfügt.

Dem unteren Bereich 54 der kombinierten Kolonne 53 wird zumindest teil-regeneriertes, wasserhaltiges Methanol aus dem Regenerationssystem 31 über die Leitungen 56 und 57 mit Hilfe der Pumpe 58 zugeführt. Das Methanol-Wasser Gemisch im unteren Teil 54 der kombinierten Kolonne 53 wird über einen Aufkocher 59 zum Sieden erhitzt. Im unteren Teil 54 der kombinierten Kolonne 53 erhaltenes Sumpfprodukt ist Wasser, welches über Leitung 60 abzogen und einer weiteren Aufarbeitung zugeführt wird (nicht gezeigt). Im unteren Teil 54 der Kolonne 53 nach oben steigende Methanol-Dämpfe gelangen nach dem Passieren des Kaminbodens in den oberen Stripp-Bereich 55 der Kolonne 53. Dem Stripp-Bereich 55 wird auch die wässrige Phase (Methanol-Wasser-Phase) über Leitung 52 zugeführt. Durch die in den Stripp-Bereich 55 gelangenden Methanol-Dämpfe werden weitere in der wässrigen Phase absorbierte Gase desorbiert, wodurch ein erfindungsgemäß zweiter Strom desorbierter Gase erhalten wird, welcher über Leitung 61 aus dem Stripp-Bereich 55 der Kolonne 53 abgezogen wird. Da der zweite Strom desorbierter Gase kleinere Mengen Methanol-Dämpfe aus der Strippung enthält, werden die Gase aus Leitung 61 dem Sauergas-Strom in Leitung 42 vor dem Wärmeaustauscher 43 zugeführt, damit das in Leitung 61 mitgeschleppte Methanol durch Kühlen in Wärmeaustauscher 43 und nachfolgende Kondensation in Abscheidebehälter 45 als Flüssigkeit abgeschieden und über Pumpe 48 in das Regenerationssystem 31 zurückgeführt werden kann. Der von Methanol befreite zweite Strom desorbierter Gase wird zusammen mit den weiteren Sauergasen über Leitung 46 aus dem Verfahren ausgeschleust.

Die von absorbierten Gasen weitestgehend befreite flüssige Phase (Methanol-Wasser-Phase) sammelt sich auf dem Kaminboden des Stripp-Bereichs 55 und wird zur Methanol-Wasser-Trennung über Leitung 62 dem unteren Bereich 54 der Kolonne 53 zugeführt. Abgetrenntes Wasser verlässt die Kolonne als Sumpfprodukt über Leitung 60, während abgetrenntes Methanol den unteren Bereich 54 der Kolonne 53 als Kopfprodukt über Leitung 63 verlässt und dem Regenerationssystem 31 zugeführt wird. Das dem Regenerationssystem 31 zugeführte Methanol in Leitung 63 kann entweder direkt zur erneuten Absorption, beispielsweise von Kohlendioxid in der zweiten Hauptwaschstufe 36 eingesetzt werden, oder es wird zunächst einer Heißregeneration unterzogen, welche ein Teil des Regenerationssystems 31 ist.

Durch die erfindungsgemäße Verfahrensführung wird sichergestellt, dass Wasser durch die Abtrennung in Abscheider 23 von vorneherein nicht in den Absorptionsbereich des Verfahrens gelangt, welcher die Absorptionsstufen 26 (Vorwaschstufe), 33 und 29 (Hauptwaschstufen) umfasst. Ferner wird durch alle nachfolgenden Verfahrensschritte sichergestellt, dass das in Abscheider 23 abgetrennte Wasser nicht mehr in einen der Methanol-Kreisläufe zurücklangen kann. Dies wird durch den Flash-Behälter 50 in Verbindung mit der kombinierten Kolonne 53 sichergestellt. Die Verfahrensführung ist dergestalt, dass das in Abscheider 23 zusammen mit Methanol abgetrennte Wasser letztlich immer als Sumpfprodukt über Leitung 60 aus der kombinierten Kolonne abgezogen wird.

Die Figur 2 zeigt ein Verfahren wie aus dem Stand der Technik bekannt. In Figur 1 verwendete Bezugszeichen werden auch für Figur 2 verwendet, sofern es sich um gleiche Elemente handelt.

Im Vergleich zum erfindungsgemäßen Verfahren nach Figur 1 wird das gekühlte Rohsynthesegas in Leitung 70, nachdem es mit Methanol aus Leitung 21 versetzt wurde, direkt der Absorption in den Waschstufen 26, 29 und 33 zugeführt. Dadurch gelangt sämtliches im Rohsynthesegas ursprünglich vorhandenes oder durch die Ammoniak-Wäsche eingeschlepptes Wasser in die Methanol-Kreisläufe des Gaswäscheverfahrens, was die vorstehend beschriebenen Nachteile mit sich bringt. Im Gegensatz zum erfindungsgemäßen Verfahren wird keine kombinierte Kolonne gemäß Figur 1 (Kolonne 53) verwendet, sondern eine einfache Rektifikationskolonne 71 zur Trennung von Methanol und Wasser.

Das folgende Zahlenbeispiel (Simulation) zeigt die Vorteile des erfindungsgemäßen Verfahrens gemäß dem erfindungsgemäßen Beispiel der Figur 1 im Vergleich zum nicht erfindungsgemäßen Vergleichsbeispiel der Figur 2.

| **Parameter** | **Einheit** | **Vergleichsbeispiel (****Figur 2****)** | **Beispiel (****Figur 1****)** |
|---|---|---|---|
| Kühlmittel | kW | 8300 | 8290 |
| Energie | kW | 5139 | 5130 |
| Kühlwasser | t/h | 2971 | 1580 |
| LP-Dampf | t/h | 22,7 | 15,1 |
| LLP-Dampf | t/h | 44,2 | 23,8 |
| Wasser-Gehalt im Methanol-Kreislauf | mol-% | 2,00 | 0,86 |
| Durchmesser Heißregenerator | mm | 5400 | 4800 |
| Durchmesser Methanol-Wasser-Trennkolonne | mm | 2500 | 1800 |

Das Zahlenbeispiel belegt, dass durch das erfindungsgemäße Verfahrensschema Einsparungen bei Betriebsmitteln (Kühlmittel, Energie, Kühlwasser und Dampf möglich sind. Durch den geringeren Wasser-Gehalt im Methanol-Kreislauf können zusätzlich der Heißregenerator sowie die Methanol-Wasser-Trennkolonne mit kleinerem Durchmesser dimensioniert werden.

### Bezugszeichenliste

- 10,13,16,19,22,25,32,34, 37,38,39,41,42,44,46,51, 61,70: Leitung (Gas)
- 11,14,18,21,24,27,28,30, 35,36,40,47,49,52,56,57, 60,62,63: Leitung (Flüssigkeit)
- 12: Ammoniak-Wäscher
- 15, 20, 43, 59: Wärmeaustauscher
- 17,23: Abscheider
- 26: Vorwaschstufe
- 33: Erste Hauptwaschstufe
- 29: Zweite Hauptwaschstufe
- 31: Regenerationssystem
- 35: Abscheidebehälter
- 48, 58: Pumpe
- 50: Flash-Behälter
- 53: Kombinierte Kolonne
- 54: Bereich für Methanol-Wasser-Trennung
- 55: Stripp-Bereich
- 71: Methanol-Wasser-Trennkolonne

## Patentansprüche

1. Verfahren zur Reinigung von Rohsynthesegas durch physikalische Absorption in Methanol, wobei das Verfahren die folgenden Prozessschritte umfasst:
(a) Bereitstellen eines Rohsynthesegasstroms, wobei das Rohsynthesegas des Rohsynthesegasstroms als erwünschte Bestandteile Wasserstoff (H₂) und Kohlenmonoxid (CO) aufweist, sowie als unerwünschte Bestandteile Wasser (H₂O) und Sauergase aufweist;
(b) Versetzen des Rohsynthesegasstroms mit Methanol;
(c) Kühlen des mit Methanol versetzten Rohsynthesegasstroms unter den Gefrierpunkt von Wasser;
(d) Abscheiden einer flüssigen Phase aus dem gekühlten Rohsynthesegasstrom, wobei die flüssige Phase Methanol und Wasser aufweist und die verbleibende gasförmige Phase Wasserstoff, Kohlenmonoxid und Sauergase aufweist;
(e) Abtrennen der Sauergase aus der gemäß Schritt (d) erhaltenen gasförmigen Phase durch physikalische Absorption in Methanol bei erhöhtem Druck, wodurch ein gereinigter Synthesegasstrom erhalten wird, sowie ein mit Sauergasen beladener Methanolstrom erhalten wird;
(f) Regenerieren des mit Sauergasen beladenen Methanolstroms, wobei ein regenerierter Methanolstrom und ein Sauergasstrom erhalten werden;
(g) Wiederverwenden des gemäß Schritt (f) erhaltenen regenerierten Methanolstroms zum Abtrennen von Sauergasen durch physikalische Absorption in Methanol gemäß Schritt (e),
**dadurch gekennzeichnet, dass**
die gemäß Schritt (d) erhaltene flüssige Phase einer Strippung unterzogen wird, wodurch in der flüssigen Phase gelöste Gase zumindest teilweise aus der flüssigen Phase desorbiert werden, wodurch ein durch Strippung der flüssigen Phase erzeugter Strom desorbierter Gase erhalten wird, wobei Methanol-Dampf als Stripp-Medium verwendet wird, und wobei
das Regenerieren des mit Sauergasen beladenen Methanolstroms gemäß Schritt (f) zumindest teilweise durch Abtrennen von Wasser aus Methanol durch ein thermisches Trennverfahren erfolgt, wobei der bei dem thermischen Trennverfahren erzeugte Methanol-Dampf als das Stripp-Medium verwendet wird.

2. Verfahren nach Anspruch 1, **dadurch gekennzeichnet, dass** die gemäß Schritt (d) erhaltene flüssige Phase einer Drucksenkung (Flashen) unterzogen wird, wodurch in der flüssigen Phase gelöste Gase zumindest teilweise aus der flüssigen Phase desorbiert werden, wodurch ein durch Flashen der flüssigen Phase erzeugter Strom desorbierter Gase erhalten wird.

3. Verfahren nach Anspruch 2, **dadurch gekennzeichnet, dass** der durch Flashen der flüssigen Phase erzeugte Strom desorbierter Gase dem gemäß Schritt (f) erhaltenen Sauergasstrom zugeführt wird.

4. Verfahren nach Anspruch 2 oder 3, **dadurch gekennzeichnet, dass** der Sauergasstrom gemäß Schritt (f) zumindest teilweise durch Heißregenerieren des mit Sauergasen beladenen Methanolstrom erhalten wird, und der durch Heißregenerieren erhaltene Sauergasstrom gasförmiges Methanol enthält, und das gasförmige Methanol durch Kühlen aus dem Sauergasstrom abgeschieden wird, wobei der durch Flashen der flüssigen Phase erzeugte Strom desorbierter Gase dem durch Heißregenerieren erhaltenen Sauergasstrom vor dem Abscheiden des Methanols, beim Abscheiden des Methanols oder nach dem Abscheiden des Methanols zugeführt wird.

5. Verfahren nach Anspruch 2, **dadurch gekennzeichnet, dass** der durch Flashen der flüssigen Phase erzeugte Strom desorbierter Gase auf Absorptionsdruck verdichtet wird, und anschließend Schritt (e) zum Abtrennen von Sauergasen aus dem ersten Strom desorbierter Gase durch physikalische Absorption in Methanol zugeführt wird.

6. Verfahren nach Anspruch 2, **dadurch gekennzeichnet, dass** der Sauergasstrom gemäß Schritt (f) zumindest teilweise durch Drucksenkung (Flashen) des mit Sauergasen beladenen Methanol erhalten wird, und der durch Flashen der flüssigen Phase erzeugte Strom desorbierter Gase dem durch Drucksenkung erhaltenen Sauergasstrom zugeführt wird.

7. Verfahren nach einem der vorherigen Ansprüche, **dadurch gekennzeichnet, dass** die gemäß Schritt (d) erhaltene flüssige Phase zunächst einer Drucksenkung unterzogen wird, und anschließend einer Strippung unterzogen wird.

8. Verfahren nach einem der vorherigen Ansprüche, **dadurch gekennzeichnet, dass** der durch Strippung der flüssigen Phase erzeugte Strom desorbierter Gase dem gemäß Schritt (f) erhaltenen Sauergasstrom zugeführt wird.

9. Verfahren nach einem der vorherigen Ansprüche, **dadurch gekennzeichnet, dass** die flüssige Phase nach der Strippung dem thermischen Trennverfahren zur Trennung von Methanol und Wasser zugeführt wird.

10. Verfahren nach einem der vorherigen Ansprüche, **dadurch gekennzeichnet, dass** der Rohsynthesegasstrom Ammoniak (NH₃) als unerwünschten Bestandteil aufweist, und das Ammoniak vor Schritt (b) zumindest teilweise durch Waschen mit Wasser aus dem Rohsynthesegasstrom entfernt wird, und die erhaltene wässrige Ammoniak-Lösung vom Rohsynthesegasstrom abgetrennt wird.

11. Verfahren nach Anspruch 10, **dadurch gekennzeichnet, dass** der zumindest teilweise von Ammoniak befreite Rohsynthesegasstrom zum Kondensieren von im Rohsynthesegasstrom verbliebener wässriger Ammoniak-Lösung vor Schritt (b) gekühlt wird, und die aus dem Rohsynthesegasstrom auskondensierte wässrige Ammoniak-Lösung vor Schritt (b) aus dem Rohsynthesegasstrom abgeschieden wird.

12. Anlage zur Reinigung von Rohsynthesegas durch physikalische Absorption in Methanol zur Durchführung des Verfahrens nach einem der Ansprüche 1 bis 11, wobei die Anlage folgende miteinander in Fluidverbindung stehende Komponenten umfasst:
(a) Mittel zum Erzeugen eines Rohsynthesegasstroms, wobei das Rohsynthesegas des Rohsynthesegasstroms als erwünschte Bestandteile Wasserstoff (H₂) und Kohlenmonoxid (CO) aufweist, sowie als unerwünschte Bestandteile Wasser (H₂O) und Sauergase aufweist;
(b) Mittel zum Versetzen des Rohsynthesegasstroms mit Methanol;
(c) Mittel (20) zum Kühlen des mit Methanol versetzten Rohsynthesegasstroms unter den Gefrierpunkt von Wasser;
(d) Mittel (23) zum Abscheiden einer flüssigen Phase aus dem gekühlten Rohsynthesegasstrom, wobei die flüssige Phase Methanol und Wasser aufweist und die verbleibende gasförmige Phase Wasserstoff, Kohlenmonoxid und Sauergase aufweist;
(e) Mittel (26, 29, 33) zum Abtrennen der Sauergase aus der gemäß (d) erhältlichen gasförmigen Phase durch physikalische Absorption in Methanol bei erhöhtem Druck, wodurch ein gereinigter Synthesegasstrom erhältlich ist, sowie ein mit Sauergasen beladener Methanolstrom erhältlich ist;
(f) Mittel (31) zum Regenerieren des mit Sauergasen beladenen Methanolstroms, wobei ein regenerierter Methanolstrom und ein Sauergasstrom erhältlich sind;
(g) Mittel zum Wiederverwenden des gemäß (f) erhältlichen regenerierten Methanolstroms zum Abtrennen von Sauergasen durch physikalische Absorption in Methanol gemäß (e),
**dadurch gekennzeichnet, dass**
den Mitteln gemäß (d) eine Stripp-Vorrichtung (55) nachgeschaltet ist, wobei in der flüssigen Phase gelöste Gase durch die Stripp-Vorrichtung zumindest teilweise aus der flüssigen Phase desorbierbar sind, wodurch ein Strom desorbierter Gase durch Strippung der flüssigen Phase erhältlich ist, und die Anlage eine Vorrichtung (54) zur thermischen Trennung von Methanol und Wasser umfasst, und die bei der thermischen Trennung von Methanol und Wasser erhältlichen Methanol-Dämpfe als Stripp-Medium in der Stripp-Vorrichtung verwendbar sind.

13. Anlage nach Anspruch 12, **dadurch gekennzeichnet, dass** den Mitteln (23) gemäß (d) eine Drucksenkungsvorrichtung (50) nachgeschaltet ist, wobei in der flüssigen Phase gelöste Gase durch die Drucksenkungsvorrichtung zumindest teilweise aus der flüssigen Phase desorbierbar sind, wodurch ein Strom desorbierter Gase durch Drucksenkung erhältlich ist.

14. Anlage nach Anspruch 12 oder 13, **dadurch gekennzeichnet, dass** die Stripp-Vorrichtung (55) und die Vorrichtung (54) zur thermischen Trennung von Methanol und Wasser in einer gemeinsamen Kolonne (53) integriert sind.

15. Verwendung der Anlage nach einem der Ansprüche 12 bis 14 in einem Verfahren nach einem der Ansprüche 1 bis 11.

## Claims

1. Process for purifying raw synthesis gas by physical absorption in methanol, wherein the process comprises the following process steps:
(a) providing a raw synthesis gas stream, wherein the raw synthesis gas of the raw synthesis gas stream comprises hydrogen (H₂) and carbon monoxide (CO) as desired constituents and comprises water (H₂O) and acid gases as undesired constituents;
(b) admixing the raw synthesis gas stream with methanol;
(c) cooling the methanol-admixed raw synthesis gas stream below the freezing point of water;
(d) separating a liquid phase from the cooled raw synthesis gas stream, wherein the liquid phase comprises methanol and water and the remaining gaseous phase comprises hydrogen, carbon monoxide and acid gases;
(e) removing the acid gases from the gaseous phase obtained according to step (d) by physical absorption in methanol at elevated pressure, whereby a purified synthesis gas stream is obtained and a methanol stream laden with acid gases is obtained;
(f) regenerating the methanol stream laden with acid gases, wherein a regenerated methanol stream and an acid gas stream are obtained;
(g) reusing the regenerated methanol stream obtained according to step (f) for removing acid gases by physical absorption in methanol according to step (e),
**characterized in that**
the liquid phase obtained according to step (d) is subjected to a stripping, thus at least partially desorbing gases dissolved in the liquid phase from the liquid phase to obtain a stream of desorbed gases produced by stripping of the liquid phase, wherein methanol vapour is used as the stripping medium and wherein
the regenerating of the methanol stream laden with acid gases according to step (f) is at least partially carried out by removal of water from methanol by a thermal separation process, wherein the methanol vapour produced in the thermal separation process is used as the stripping medium.

2. Process according to Claim 1, **characterized in that** the liquid phase obtained according to step (d) is subjected to a depressurization (flashing), thus at least partially desorbing gases dissolved in the liquid phase from the liquid phase to obtain a stream of desorbed gases produced by flashing of the liquid phase.

3. Process according to Claim 2, **characterized in that** the stream of desorbed gases produced by flashing of the liquid phase is supplied to the acid gas stream obtained according to step (f).

4. Process according to Claim 2 or 3, **characterized in that** the acid gas stream according to step (f) is at least partially obtained by hot regeneration of the methanol stream laden with acid gases and the acid gas stream obtained by hot regeneration contains gaseous methanol and the gaseous methanol is separated from the acid gas stream by cooling, wherein the stream of desorbed gases produced by flashing of the liquid phase is supplied to the acid gas stream obtained by hot regeneration before the separation of the methanol, during the separation of the methanol or after the separation of the methanol.

5. Process according to Claim 2, **characterized in that** the stream of desorbed gases produced by flashing of the liquid phase is compressed to absorption pressure and is subsequently supplied to step (e) for removing acid gases from the first stream of desorbed gases by physical absorption in methanol.

6. Process according to Claim 2, **characterized in that** the acid gas stream according to step (f) is at least partially obtained by depressurization (flashing) of the methanol laden with acid gases and the stream of desorbed gases produced by flashing of the liquid phase is supplied to the acid gas stream obtained by depressurization.

7. Process according to any of the preceding claims, **characterized in that** the liquid phase obtained according to step (d) is initially subjected to a depressurization and is subsequently subjected to a stripping.

8. Process according to any of the preceding claims, **characterized in that** the stream of desorbed gases produced by stripping of the liquid phase is supplied to the acid gas stream obtained according to step (f).

9. Process according to any of the preceding claims, **characterized in that** after the stripping the liquid phase is supplied to the thermal separation process for separation of methanol and water.

10. Process according to any of the preceding claims, **characterized in that** the raw synthesis gas stream comprises ammonia (NH₃) as an undesired constituent and before step (b) the ammonia is at least partially removed from the raw synthesis gas stream by scrubbing with water and the obtained aqueous ammonia solution is removed from the raw synthesis gas stream.

11. Process according to Claim 10, **characterized in that** the raw synthesis gas stream at least partially freed of ammonia is cooled before step (b) to condense aqueous ammonia solution remaining in the raw synthesis gas stream and the aqueous ammonia solution condensed out of the raw synthesis gas stream is separated from the raw synthesis gas stream before step (b).

12. Plant for purifying raw synthesis gas by physical absorption in methanol for performing the process according to any of Claims 1 to 11, wherein the plant comprises the following components in fluid connection with one another:
(a) means for producing a raw synthesis gas stream, wherein the raw synthesis gas of the raw synthesis gas stream comprises hydrogen (H₂) and carbon monoxide (CO) as desired constituents and comprises water (H₂O) and acid gases as undesired constituents;
(b) means for admixing the raw synthesis gas stream with methanol;
(c) means (20) for cooling the methanol-admixed raw synthesis gas stream below the freezing point of water;
(d) means (23) for separating a liquid phase from the cooled raw synthesis gas stream, wherein the liquid phase comprises methanol and water and the remaining gaseous phase comprises hydrogen, carbon monoxide and acid gases;
(e) means (26, 29, 33) for removing the acid gases from the gaseous phase obtainable according to (d) by physical absorption in methanol at elevated pressure, whereby a purified synthesis gas stream is obtainable and a methanol stream laden with acid gases is obtainable;
(f) means (31) for regenerating the methanol stream laden with acid gases, wherein a regenerated methanol stream and an acid gas stream are obtainable;
(g) means for reusing the regenerated methanol stream obtainable according to (f) for removing acid gases by physical absorption in methanol according to (e),
**characterized in that**
the means according to (d) have a stripping apparatus (55) arranged downstream of them, wherein gases dissolved in the liquid phase are at least partially desorbable from the liquid phase by the stripping apparatus, thus making it possible to obtain a stream of desorbed gases by stripping of the liquid phase, and the plant comprises an apparatus (54) for thermal separation of methanol and water and the methanol vapours obtainable in the thermal separation of methanol and water are usable as stripping medium in the stripping apparatus.

13. Plant according to Claim 12, **characterized in that** the means (23) according to (d) have a depressurization apparatus (50) arranged downstream of them, wherein gases dissolved in the liquid phase are at least partially desorbable from the liquid phase by the depressurization apparatus, thus making it possible to obtain a stream of desorbed gases by depressurization.

14. Plant according to Claim 12 or 13, **characterized in that** the stripping apparatus (55) and the apparatus (54) for thermal separation of methanol and water are integrated in a common column (53).

15. Use of the plant according to any of Claims 12 to 14 in a process according to any of Claims 1 to 11.

## Revendications

1. Procédé de purification de gaz de synthèse brut par absorption physique dans du méthanol, le procédé comprenant les étapes de procédé suivantes :
(a) mise à disposition d'un flux de gaz de synthèse brut, le gaz de synthèse brut du flux de gaz de synthèse brut présentant, en tant que constituants souhaités, de l'hydrogène (H₂) et du monoxyde de carbone (CO), ainsi que, en tant que constituants non souhaités, de l'eau (H₂O) et des gaz acides ;
(b) ajout de méthanol au flux de gaz de synthèse brut ;
(c) refroidissement du flux de gaz de synthèse brut additionné de méthanol au-dessous du point de congélation de l'eau ;
(d) isolement d'une phase liquide à partir du flux de gaz de synthèse brut refroidi, la phase liquide présentant du méthanol et de l'eau et la phase gazeuse restante présentant de l'hydrogène, du monoxyde de carbone et des gaz acides ;
(e) séparation des gaz acides à partir de la phase gazeuse obtenue selon l'étape (d) par absorption physique dans du méthanol à pression élevée, suite à quoi un flux de gaz de synthèse purifié ainsi qu'un flux de méthanol chargé de gaz acides sont obtenus ;
(f) régénération du flux de méthanol chargé de gaz acides, un flux de méthanol régénéré et un flux de gaz acides étant obtenus ;
(g) réutilisation du flux de méthanol régénéré obtenu selon l'étape (f) pour la séparation de gaz acides par absorption physique dans du méthanol selon l'étape (e),
**caractérisé en ce que**
la phase liquide obtenue selon l'étape (d) est soumise à un lavage, suite à quoi des gaz dissous dans la phase liquide sont désorbés au moins partiellement à partir de la phase liquide, suite à quoi un flux de gaz désorbés, produit par lavage de la phase liquide, est obtenu, de la vapeur de méthanol étant utilisée comme agent de lavage et
la régénération du flux de méthanol chargé de gaz acides selon l'étape (f) étant effectuée au moins partiellement par séparation de l'eau à partir du méthanol par un procédé de séparation thermique, la vapeur de méthanol produite par le procédé de séparation thermique étant utilisée comme agent de lavage.

2. Procédé selon la revendication 1, **caractérisé en ce que** la phase liquide obtenue selon l'étape (d) est soumise à un abaissement de la pression (flashage), suite à quoi des gaz dissous dans la phase liquide sont désorbés au moins partiellement à partir de la phase liquide, suite à quoi un flux de gaz désorbés produit par flashage de la phase liquide est obtenu.

3. Procédé selon la revendication 2, **caractérisé en ce que** le flux de gaz désorbés obtenu par le flashage de la phase liquide est introduit dans le flux de gaz acides obtenu selon l'étape (f).

4. Procédé selon la revendication 2 ou 3, **caractérisé en ce que** le flux de gaz acides selon l'étape (f) est obtenu au moins partiellement par régénération à chaud du flux de méthanol chargé de gaz acides et le flux de gaz acides obtenu par régénération à chaud contient du méthanol gazeux et le méthanol gazeux est isolé par refroidissement à partir du flux de gaz acides, le flux de gaz désorbés produit par flashage de la phase liquide étant introduit dans le flux de gaz acides obtenu par régénération à chaud avant l'isolement du méthanol, lors de l'isolement du méthanol ou après l'isolement du méthanol.

5. Procédé selon la revendication 2, **caractérisé en ce que** le flux de gaz désorbés produit par flashage de la phase liquide est comprimé à la pression d'absorption et ensuite introduit dans l'étape (e) pour la séparation de gaz acides à partir du premier flux de gaz désorbés par absorption physique dans du méthanol.

6. Procédé selon la revendication 2, **caractérisé en ce que** le flux de gaz acides selon l'étape (f) est obtenu au moins partiellement par abaissement de pression (flashage) du méthanol chargé de gaz acides et le flux de gaz désorbés produit par flashage de la phase liquide est introduit dans le flux de gaz acides obtenu par abaissement de pression.

7. Procédé selon l'une des revendications précédentes, **caractérisé en ce que** la phase liquide obtenue selon l'étape (d) est d'abord soumise à un abaissement de pression et ensuite à un lavage.

8. Procédé selon l'une des revendications précédentes, **caractérisé en ce que** le flux de gaz désorbés produit par lavage de la phase liquide est introduit dans le flux de gaz acides obtenu selon l'étape (f).

9. Procédé selon l'une des revendications précédentes, **caractérisé en ce que** la phase liquide après le lavage est introduite dans le procédé de séparation thermique pour la séparation du méthanol et de l'eau.

10. Procédé selon l'une des revendications précédentes, **caractérisé en ce que** le flux de gaz de synthèse brut présente de l'ammoniac (NH₃) en tant que constituant non souhaité et l'ammoniac est éliminé au moins partiellement par lavage avec de l'eau, avant l'étape (b), à partir du flux de gaz de synthèse brut et la solution aqueuse d'ammoniac obtenue est séparée du flux de gaz de synthèse brut.

11. Procédé selon la revendication 10, **caractérisé en ce que** le flux de gaz de synthèse brut libéré au moins partiellement de l'ammoniac est refroidi avant l'étape (b) pour la condensation de solution aqueuse d'ammoniac restant dans le flux de gaz de synthèse brut et la solution aqueuse d'ammoniac condensée à partir du flux de gaz de synthèse brut est isolée à partir du flux de gaz de synthèse brut avant l'étape (b).

12. Installation de purification de gaz de synthèse brut par absorption physique dans du méthanol, destinée à la réalisation du procédé selon l'une des revendications 1 à 11, l'installation comprenant les composants suivants en communication fluidique les uns avec les autres :
(a) des moyens pour la production d'un flux de gaz de synthèse brut, le gaz de synthèse brut du flux de gaz de synthèse brut présentant, en tant que constituants souhaités, de l'hydrogène (H₂) et du monoxyde de carbone (CO), ainsi que, en tant que constituants non souhaités, de l'eau (H₂O) et des gaz acides ;
(b) des moyens pour l'ajout de méthanol au flux de gaz de synthèse brut ;
(c) des moyens (20) pour le refroidissement du flux de gaz de synthèse brut additionné de méthanol au-dessous du point de congélation de l'eau ;
(d) des moyens (23) pour l'isolement d'une phase liquide à partir du flux de gaz de synthèse brut refroidi, la phase liquide présentant du méthanol et de l'eau et la phase gazeuse restante présentant de l'hydrogène, du monoxyde de carbone et des gaz acides ;
(e) des moyens (26, 29, 33) pour la séparation des gaz acides à partir de la phase gazeuse pouvant être obtenue selon (d) par absorption physique dans du méthanol à pression élevée, suite à quoi un flux de gaz de synthèse purifié ainsi qu'un flux de méthanol chargé de gaz acides pouvant être obtenus ;
(f) des moyens (31) pour la régénération du flux de méthanol chargé de gaz acides, un flux de méthanol régénéré et un flux de gaz acides pouvant être obtenus ;
(g) des moyens pour la réutilisation du flux de méthanol régénéré pouvant être obtenu selon (f) pour la séparation de gaz acides par absorption physique dans du méthanol selon (e),
**caractérisée en ce que**
les moyens selon (d) sont suivis d'un dispositif de lavage (55), les gaz dissous dans la phase liquide pouvant être désorbés au moins partiellement à partir de la phase liquide par le dispositif de lavage, suite à quoi un flux de gaz désorbés peut être obtenu par lavage de la phase liquide et l'installation comprenant un dispositif (54) pour la séparation thermique du méthanol et de l'eau et les vapeurs de méthanol pouvant être obtenues lors de la séparation thermique du méthanol et de l'eau pouvant être utilisées en tant qu'agent de lavage dans le dispositif de lavage.

13. Installation selon la revendication 12, **caractérisée en ce que** les moyens (23) selon (d) sont suivis d'un dispositif (50) d'abaissement de pression, les gaz dissous dans la phase liquide pouvant être désorbés au moins partiellement à partir de la phase liquide par le dispositif d'abaissement de pression, suite à quoi un flux de gaz désorbés peut être obtenu par abaissement de pression.

14. Installation selon la revendication 12 ou 13, **caractérisée en ce que** le dispositif (55) de lavage et le dispositif (54) pour la séparation thermique du méthanol et de l'eau sont intégrés dans une colonne (53) commune.

15. Utilisation de l'installation selon l'une des revendications 12 à 14 dans un procédé selon l'une des revendications 1 à 11.
